# EUROPEAN PATENT SPECIFICATION

(11) **EP 0 836 075 B1**
(45) Date of publication and mention of the grant of the patent: **12.03.2003**
(21) Application number: 97117340.6
(22) Date of filing: 07.10.1997
(51) Int. Cl.: G01D 3/08, G01M 15/00, F01N 7/00

(54) **Method of estimating the efficiency of a system for reducing the polluting emissions of an internal-combustion engine**
Verfahren zur Abschätzung der Effizienz eines Systems zur Verminderung der Schadstoffemissionen einer Brennkraftmaschine
Méthode d'estimation de l'efficacité d'un système pour réduire les émissions polluantes d'un moteur à combustion interne

(30) Priority: 10.10.1996 IT BO960509
(43) Date of publication of application: 15.04.1998
(73) Proprietor: MAGNETI MARELLI POWERTRAIN S.p.A., 10138 Torino (IT)
(72) Inventor: Sidoti, Cinzia, 10020 Revigliasco (IT); Carnevale, Claudio, 95000 Cergy (FR); Sgatti Stefano, 40026 Imola (IT)
(74) Representative: Jorio, Paolo

(56) References cited:
- EP-A- 0 720 004
- DE-A- 4 100 501

## Description

The present invention relates to a method of estimating the efficiency of a system for reducing the polluting emissions of an internal-combustion engine.

The devices or elements in a system may be divided up into actuators, i.e. devices which perform a physical operation, and sensors, i.e. devices which do not perform physical operations, but detect the condition of physical states and convert it into a signal, generally of the electrical type.

Numerous applications are known in which the efficiency of one or more actuators of a system is monitored by means of the processing of a set of signals originating from sensors present in the system itself. Applications are also known in which the efficiency of individual sensors is monitored by means of the processing of a set of signals originating from other sensors present in the system itself.

The limitation of existing applications is that they are unable to recognize and process situations involving multiple or simultaneous defects of several sensors, i.e. the situations in which several sensors are partially or totally defective at the same time. In these situations the existing applications are normally unable to recognize which components of the system, i.e. actuators or sensors, are actually defective and which are still working efficiently, but behave as though they were defective on account of the negative effect of the components which are actually defective.

It is obvious that this limitation is particularly damaging in applications where a high degree of reliability in the defect diagnoses is required; a typical example of such applications is monitoring of the efficiency of a device for reducing the polluting emissions of an internal-combustion engine.

The regulations in the United States for the monitoring of polluting emissions, known by the name OBD2 (currently in force), and the equivalent European regulations for the monitoring of polluting emissions, known by the name EOBD (still at the preparatory stage) require that the manufacturers of internal-combustion engines monitor the efficiency of all the components, the defective performance of which may cause an increase in the polluting emissions, and hence of all the components in the device for reducing polluting emissions. Moreover, if one of these components should exceed the maximum permissible level of defective operation, the monitoring device must indicate this co the user, who is required to replace the defective component.

It is obvious that, in view of the need for replacement of a defective component, the monitoring device must be able to provide reliable information regarding the state of various components which are monitored.

In the known monitoring devices of systems for reducing the polluting emissions of an internal-combustion engine, simultaneous or multiple defects of the sensors are not processed, so that in the case where several sensors are partially or totally defective, the latter may provide incorrect measurements to a central unit monitoring the efficiency, with consequent signalling of replacement of a component which is working efficiently or failure to signal replacement of a component which is not working efficiently.

A typical example of this situation is the defective condition of a lambda probe which is located upstream of a catalyser; even though the catalyser still remains within the permissible operating limits, the defective lambda probe could induce the monitoring algorithm to consider the catalyser as not working properly. Methods for processing a plurality of signals have been disclosed for example in EP-A-720004 and in DE-A-4100501

The object of the present invention is a method for processing a plurality of signals originating from sensors or from the processing of other signals generated by sensors, for evaluating the efficiency of one or more devices or elements in a system, which is able to function correctly even in the case of multiple or simultaneous defects of several sensors or actuators.

According to the present invention a method for estimating the efficiency of a system for reducing the polluting emissions of an internal-combustion engine, as claimed in claim 1.

For a better understanding of the present invention a description is now provided of a preferred embodiment, purely by way of a non-limiting example, with reference to the accompanying drawings, in which:
Figure 1 illustrates schematically an internal-combustion engine functioning in accordance with the monitoring method of the present invention;
Figure 2 is a table relating to a set of values assumed under different operating conditions by a plurality of parameters of the engine according to Figure 1;
Figure 3 is a diagram showing some values assumed under different operating conditions by two parameters of the engine according to Figure 1;
Figure 4 illustrates a detail of a part of the engine according to Figure 1; and
Figure 5 is a diagram showing some values assumed under different operating conditions by some parameters of the engine according to Figure 1.

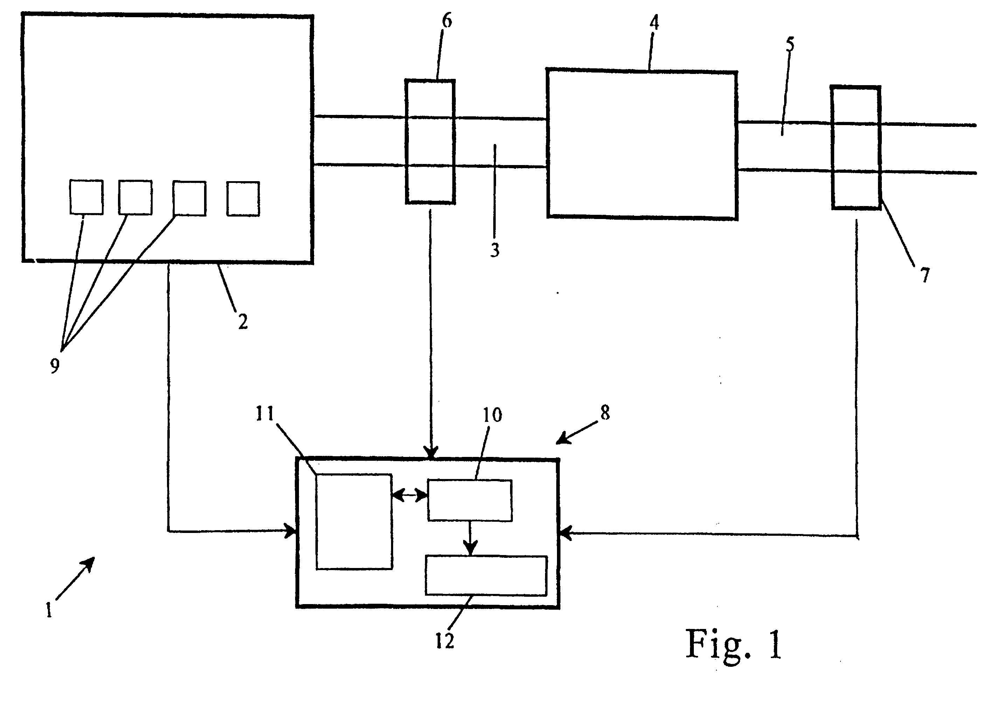

Illustrated with the reference 1 in Figure 1 is an internal-combustion engine functioning according to the monitoring method of the present invention.

The engine 1 comprises an engine block 2, an exhaust manifold 3, a catalyser 4 connected to the engine block 2 by means of the exhaust manifold 3, an outlet duct 5 connected to the catalyser 4, a sensor 6 located on the exhaust manifold 3, a sensor 7 located on the outlet duct 5 and a central control unit 8 connected to the engine block 2, the sensor 6 and the sensor 7.

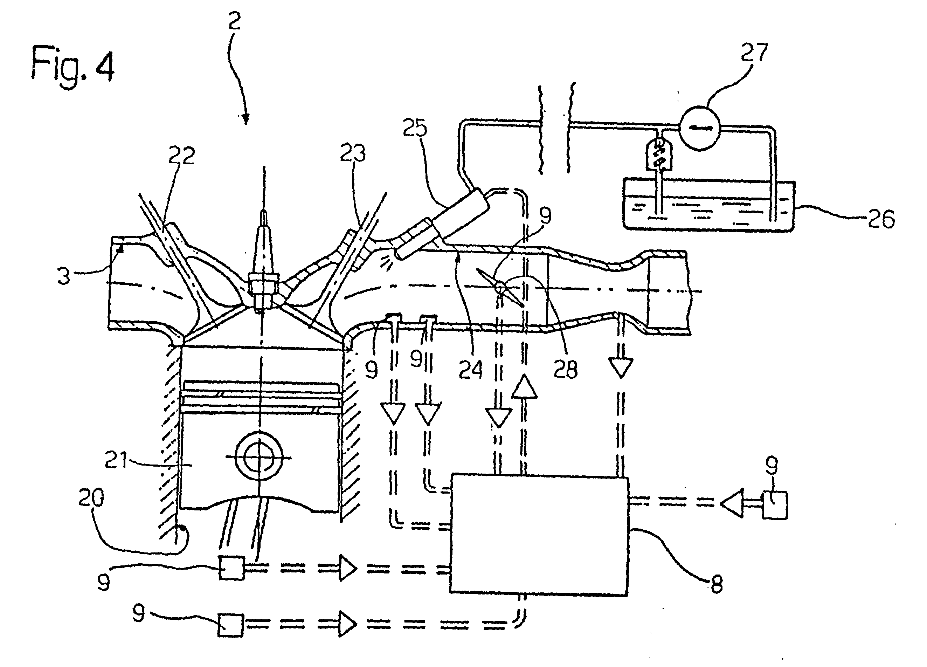

As illustrated in Figure 4, the engine block 2 comprises a plurality of components characteristic of a petrol powered internal-combustion engine: a plurality of cylinders 20 containing respective movable pistons 21 all connected to the same crankshaft (not shown); in the crown of each cylinder there is at least one opening closed by an exhaust valve 22 connected to the exhaust manifold 3 and a second opening closed by an intake valve 23 and connected to a chamber called the intake manifold 24. In the intake manifold 24 there is an injector 25 supplied by a petrol tank 26 by means of a pump 27 and designed to inject petrol into the intake manifold 24 itself as well as a butterfly valve 28 for throttling the quantity of incoming air. Moreover the engine block 2 is provided with a cooling device (not shown) normally using a cooling liquid, typically water, which is circulated inside the engine block 2.

The engine block 2 comprises moreover a plurality of sensors 9 connected to the central control unit 8 for detecting a plurality of parameters characteristic of operation of the engine 1, such as, for example, the temperature of the cooling liquid, the speed of rotation of the crankshaft, the average pressure present in the intake duct 24 and the position of the butterfly valve 28.

The sensors 6 and 7 (Figure 1) consist of a first and a second lambda probe (respectively referred to as lambda probe upstream of the catalyser and lambda probe downstream of the catalyser) for detecting the stoichiometric composition of the discharge gases before and after catalyser 4, respectively.

The central control unit 8 comprises a processing unit 10, a memory unit 11 connected to the processing unit 10 and a display unit 12 controlled by the processing unit 10.

The method according to the present invention applied to monitoring of the efficiency of the system for reducing the polluting emissions of the engine 1 is described below.

The monitoring system is designed such that it comprises several successive stages described below.

During a first stage the set of components, i.e. actuators and sensors, whose state of efficiency is to be monitored, is defined; in particular in this example of embodiment, it is the efficiency of the system for reducing the polluting emissions of the engine 1, i.e. the catalyser 4 and the sensors 6 and 7, which is to be monitored.

During a second stage, the possible defective conditions of the components whose efficiency is to be monitored, i.e. the catalyst 4 and the sensors 6 and 7, are defined and analysed.

During a third stage a general plurality of signals comprising all the signals which are or could be discriminating with regard to evaluation of the defective state of the components whose efficiency is to be monitored, is defined. These signals may originate directly from sensors or may originate from the processing of other signals generated by sensors.

During a fourth stage, a series of experimental tests is carried out on the engine 1; these tests are performed with different defective states of the components whose efficiency is to be monitored (typically the defect is simulated electronically) and under various operating conditions of the engine 1 (for example by varying the number of revolutions of the crankshaft, the temperature of the cooling liquid, the position of the butterfly valve 28, and so on). For each test, which is distinguished by a particular defective state and by a particular operating condition, a plurality of values corresponding to the said general plurality of signals is acquired. The set of results from these tests is combined in the form of a first series of plurality of values. Subsequently the first series of plurality of values is analysed statistically by means of statistical methods of discriminating canonical analysis so as to identify the signals of the said general plurality having the highest discriminating content with regard to the defective conditions of the components whose efficiency is to be monitored, i.e. the catalyser 4 and the sensors 6 and 7. The signals of the general plurality which have the greatest discriminating content are combined in a discriminating plurality of signals, to which a second series of plurality of values corresponds. The second series of plurality of values is composed of the values of the first series of plurality of values which correspond to the signals of the discriminating plurality of signals.

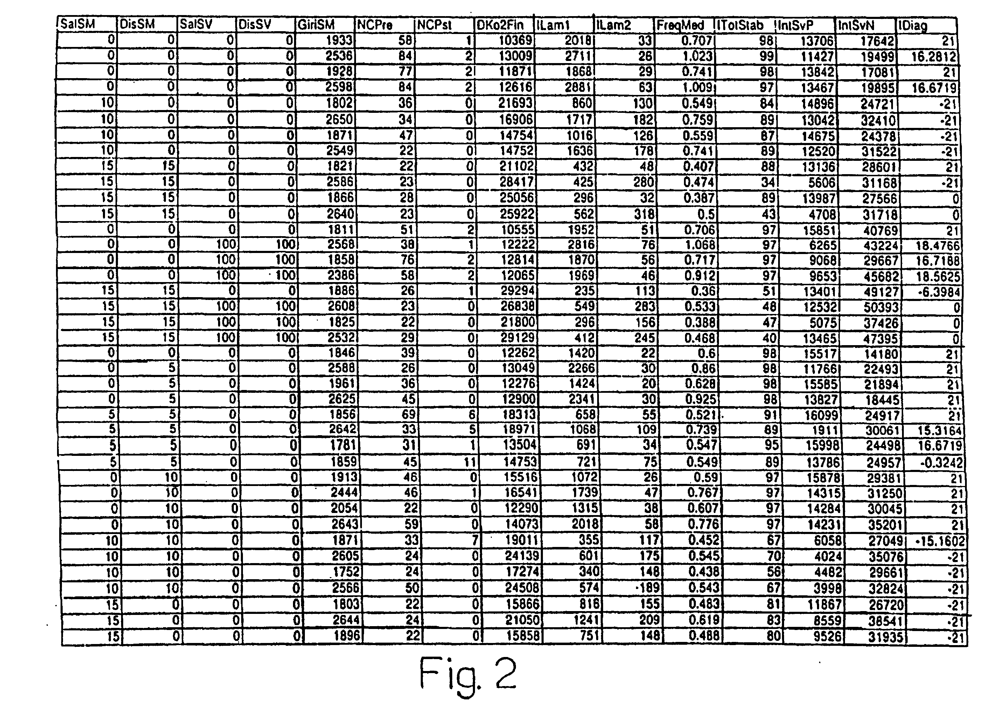

An example of a second series of plurality of values corresponding to a discriminating plurality of signals is represented by the table according to Figure 2, in which the various monitored signals are shown in the columns, while the pluralities of values assumed in the various operating conditions are shown in the rows. This table was obtained during tests for developing a system for monitoring the efficiency of the lambda probes 6 and 7 and the catalyser 4 of the engine 1. In this example, the discriminating plurality of signals is defined by the following signals:

| | |
|---|---|
| GiriSM | number of revolutions of the crankshaft of the engine 1 |
| NCPre | number of commutations of the upstream probe (sensor 6) |
| NCPst | number of commutations. of the downstream probe (sensor 7) |
| DKo2Fin | variation in monitoring of the strength of the upstream probe (sensor 6) |
| Ilam1 | energy content of the signal of the upstream probe (sensor 6) |
| Ilam2 | energy content of the signal of the downstream probe (sensor 7) |
| ITotStab | catalyser index |
| Freqmed | mean frequency of the signal of the upstream probe (sensor 6) |
| IntSvP | rich-lean transition time of the downstream probe (sensor 7) during cut-off |
| IntSvN | lean-rich transition time of the downstream probe (sensor 7) when injection enrichment is performed |
| IDiag | diagnosis of the lean-rich/rich-lean switching dissymmetry of the signal of the upstream probe (sensor 6) |

The first four columns of the table according to Figure 2 show the simulated deficiency value of the lambda probes 6 and 7 during the various experimental tests. In particular SaISM (index of the delay in rising of the signal) and DiSM (index of the delay in falling of the signal) refer to the upstream lambda probe (sensor 6), while SaISV (index of the delay in rising of the signal) and DisSV (index of the delay in falling of the signal) refer to the downstream lambda probe (sensor 7). A higher value of these parameters indicates a greater deficiency of the corresponding lambda probe.

During a fifth stage it is determined which and how many defect categories (or clusters or classes) affecting each component whose efficiency is to be monitored can be separated in the space defined by the discriminating plurality of signals. This evaluation is performed by applying statistical methods of analysis of the clusters (i.e. "cluster analysis") to the second series of plurality of values determined experimentally.

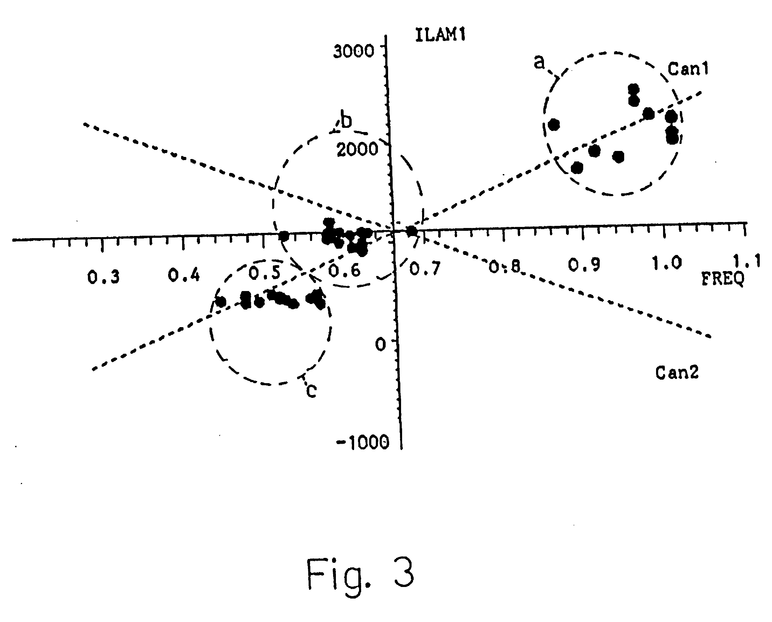

A first example of this is shown in Figure 3 which illustrates a diagram showing the result of a cluster analysis applied to a series of plurality of values limited to three well-defined defective states of the engine 1 and relating to only two signals (for the sake of simplicity and clarity of the diagram) of the engine 1, in particular Ilam1 and Freqmed (respectively, the energy content of the signal of the sensor 6 and the mean frequency of the signal of the sensor 6). The three defective states are respectively: normal operation of the upstream probe (sensor 6), partial deficiency of the upstream probe (sensor 6), complete deficiency of the upstream probe (sensor 6). It can be noted how the values assumed by the two signals Ilam1 and Freqmed in the three defective states are located in three separate zones of the diagram: zone "a" for the first state, zone "b" for the second state, and zone "c" for the third state. Thus a well-defined defective state of the engine 1 corresponds to each defect cluster or class which can be separated (or distinguished).

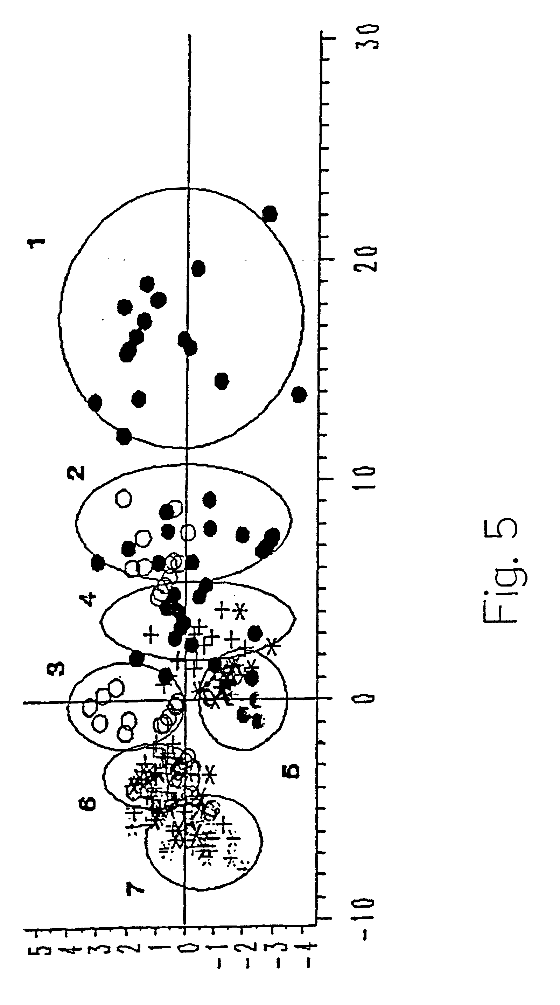

If the number of signals considered and the number of operating conditions is increased, separation of all the defective states into corresponding classes may not be possible. An example of this is shown in Figure 5, which illustrates a diagram showing the result of a cluster analysis applied to a greater number of defective states and a greater number of signals compared to the example in Figure 3. In the diagram according to Figure 5, a bullet, a cross and an asterisk illustrate the various pluralities of signals which can be detected experimentally, projected along canonical axes identified by means of the said applied statistical methods of discriminating canonical analysis. In the diagram the defective classes which can be separated are shown by a continuous line and numbered from 1 to 7. It can be noted how some classes (for example class 1) are associated with a single defective state, whereas other classes (for example class 4) are associated with several defective states. This is due to the fact that with the analysis of the signals used it is not possible to separate, i.e. to recognize individually, any defective states. This situation normally occurs with defective states which are similar, i.e. distinguished by similar defects of the same components, so that this situation does not represent a significant limitation of the method of the present invention.

During a sixth stage a type of relationship index function is chosen, i.e. a function which, following inputting of a series of typical coefficients of a defect cluster or class and inputting of a plurality of values detected by a plurality of signals, outputs the index of relationship of the plurality of signals with the defect cluster or class in question. The types of discriminating functions obtained from these index functions may be many: following theoretical studies and experimental tests it has been shown that the functions which overall are best suited for the analysis of the efficiency of a system for reducing the polluting levels of an internal-combustion engine 1 are polynomial functions.

During a seventh stage, the matrix of the values of the coefficients typical of each defect cluster or class are determined for the polynomial relationship index function by applying the statistical methods of cluster analysis, as described above (fifth stage). This matrix of the coefficients is determined by applying statistical methods of discriminating analysis applied to the second series of plurality of values corresponding to the discriminating plurality of signals.

During an eighth stage, a corresponding value or plurality of output values is associated with each category or cluster. The number and the type of output values associated with each category or cluster depend essentially on the type of use for which these values are intended. The output values, that is, may be used for subsequent processing operations (for example the calculation of some control parameters based on these values) or may be directly used for carrying out evaluations of the state of efficiency of components of the engine 1 (for example for indicating whether or not the replacement of a component is necessary or for indicating a percentage of residual efficiency of one or more components).

With the eighth stage, the design of the monitoring system is terminated; the operation of this monitoring system is described below.

According to the monitoring procedure of the present invention, during operation of the engine 1, the processing unit 10 periodically detects the plurality, referred to as plurality of input values, of the values corresponding to the signals of the discriminating plurality of values. Then the processing unit 10 calculates the value of the index of relationship of the plurality of input values with each of the said defect clusters or categories in order to determine the relationship category or cluster of the plurality of input values itself, i.e. the category or cluster with regard to which the plurality of input values has the highest relationship index. The value of the index of relationship of the plurality of input values with a defect category or cluster is calculated by means of the said relationship index function which uses the values of the plurality of input values and the values of the coefficients associated with the category or cluster in question.

Once the relationship category has been determined, the current operating state is attributed the operating state characteristic of the category to which the plurality of input values belongs. This operating state is expressed physically by the plurality of output values characterizing this relationship category.

The plurality of output values may be more or less homogeneous with the plurality of input values. A first plurality of values is understood as being homogeneous with a second plurality of values if between the values of the two pluralities it is possible to establish a relationship where two values related with one another refer to a same parameter. In the case where the plurality of output values is homogeneous with the plurality of acquired values, this output plurality, characteristic for each category or cluster, may be defined in different ways, for example may be equated to the plurality of values of a particular measurement, or may be equated to the plurality of barycentric values of the category, i.e. that plurality of values calculated by taking a weighted mean of all the plurality of values of the said second series of plurality of values which belong to the defect category in question.

Finally, if necessary, the processing unit 10 sends a suitable command signal to the display unit 12 so as to warn the user of the type of fault or defect in progress.

The method according to the present invention has numerous advantages: in particular it manages to detect and quantify multiple defective conditions of several sensors and/or actuators at the same time, taking into account the reciprocal influences exerted by the defective components on one other.

In particular, in the evaluation of the state of efficiency of a series of components, the method according to the present invention is able to achieve a notable increase in the reliability of the diagnoses with a consequent reduction in the maintenance costs, since only the components which are actually defective are replaced, and a consequent increase in the overall efficiency of the apparatus, since the defective condition of a component is readily signalled.

Moreover the method according to the present invention may be implemented at a low cost in any device for monitoring the defective state, since by intervening only with regard to processing of the signals originating from the sensors or from existing signal processing means, the addition of further components is not required.

Finally it is obvious that modifications and variations may be made to the monitoring method described and illustrated herein.

## Claims

1. Method of estimating the efficiency of a system for reducing the polluting emissions of an internal-combustion engine (1) comprising a catalytic system and having a plurality of components provided with control sensors (6, 7, 9) for supplying a plurality of signals;
the method comprising the steps of:
acquiring a plurality of values, each value of said plurality of values corresponding to a respective signal of said plurality of signals;
associating an output value to said plurality of signals;
calculating an index of relationship of said plurality of values with a set of predefined deterioration categories, by means of a predetermined relationship index function, each of said deterioration categories having associated a coefficient vector, used by said relationship index function for calculating said index of relationship, and at least one said output value characteristic of said deterioration category, said output value being correlated to a deterioration state of the components of said catalytic system; and
associating with said plurality of signals said output value characteristic of the category having the highest relationship index with said plurality of values.

2. Method according to claim 1, **characterized in that** the said relationship index function is defined by a polynomial.

3. Method according to any one of the preceding claims, **characterized in that** the said coefficient vectors associated with the said categories are calculated by means of statistical methods of discriminating analysis applied to a first group of plurality of values in which each plurality of values is associated with the said plurality of signals.

4. Method according to claim 3, **characterized in that** the said first group of plurality of values is acquired by means of experimental tests.

5. Method according to any one of the preceding claims, **characterized in that** the said categories are defined by means of the use of statistical methods of cluster analysis applied to a second group of plurality of values in which each plurality of values is associated with at least the said plurality of signals.

6. Method according to claim 5, **characterized in that** the said second group of plurality of values is acquired by means of experimental tests.

7. Method according to claim 6, **characterized in that** the said second group of plurality of values coincides with the said first group of plurality of values.

8. Method according to any one of . the preceding claims, **characterized in that** the said plurality of signals is defined by signals which belong to a general plurality of signals and which have the greatest discriminating power with regard to possible defective conditions of the said device.

9. Method according to claim 8, **characterized in that** the discriminating power is calculated by applying statistical methods of discriminating canonical analysis to a third group of plurality of values in which each plurality of values is associated with the said general plurality of signals.

10. Method according to any one of the preceding claims, **characterized in that** it operates with a system comprising at least one actuator and at least one sensor, at least one of the signals of the said plurality of signals originating from the said sensor or from components that process the signals originating from the said sensor.

11. Method according to claim 10, **characterized in that** said output value is designed to indicate the defective state of the said sensor.

12. Method according to claim 10, **characterized in that** the said output value is designed to indicate the defective state of the said actuator.

13. Method according to claim 10, **characterized in that** the said output value is designed to indicate the defective state of the said sensor and the said actuator.

14. Method according to any one of the preceding claims, **characterized in that** a plurality of output values is associated with each said category.

15. Method according to claim 14, **characterized in that** the said plurality of output values is homogeneous with the said plurality of input values.

16. Method according to claim 15, **characterized in that** said plurality of output values associated with a first of the said categories is the barycentric plurality of values of the said first category itself.

17. Internal-combustion engine comprising a catalytic system for reducing polluting emissions, **characterized in that** it comprises a device for monitoring the efficiency of the said catalytic system operating in accordance with the method according to any of claims 1 to 16.

## Patentansprüche

1. Verfahren zum Schätzen des Wirkungsgrades eines Systems zum Reduzieren der Schadstoffemissionen eines Verbrennungsmotors (1), der ein katalytisches System und eine Vielzahl von Komponenten hat, die mit Steuersensoren (6, 7, 9) versehen sind, um eine Vielzahl von Signalen zu liefern;
wobei das Verfahren folgende Schritte aufweist:
eine Vielzahl von Werten wird erfaßt, wobei jeder Wert der Vielzahl von Werten jeweils einem Signal der Vielzahl von Signalen entspricht;
ein Ausgangswert wird der Vielzahl von Signalen zugeordnet;
ein Relationsindex der Vielzahl von Werten mit einem Satz von vordefinierten Verschlechterungskategorien wird mittels einer vorbestimmten Relationsindexfunktion berechnet, wobei jeder Verschlechterungskategorie ein Koeffizientenvektor zugeordnet ist, der von der Relationsindexfunktion zum Berechnen des Relationsindex verwendet wird, und wenigstens ein Ausgangswert, der für die Verschlechterungskategorie charakteristisch ist, wobei der Ausgangswert mit einem Verschlechterungszustand der Komponenten des katalytischen Systems korreliert ist;
und der Vielzahl von Signalen wird der Ausgangswert zugeordnet, der für die Kategorie charakteristisch ist, die den höchsten Relationsindex mit der Vielzahl von Werten hat.

2. Verfahren nach Anspruch 1, **dadurch gekennzeichnet, daß** die Relationsindexfunktion durch ein Polynom definiert ist.

3. Verfahren nach einem der vorhergehenden Ansprüche, **dadurch gekennzeichnet, daß** die Koeffizientenvektoren, die den Kategorien zugeordnet sind, mittels statistischer Methoden der Diskriminanzanalyse berechnet sind, die auf eine erste Gruppe einer Vielzahl von Werten angewandt wird, wobei jede Vielzahl von Werten der Vielzahl von Signalen zugeordnet ist.

4. Verfahren nach Anspruch 3, **dadurch gekennzeichnet, daß** die erste Gruppe der Vielzahl von Werten mittels experimenteller Tests erfaßt ist.

5. Verfahren nach einem der vorhergehenden Ansprüche, **dadurch gekennzeichnet, daß** die Kategorien mittels der Verwendung statistischer Methoden der Cluster-Analyse definiert sind, die auf eine zweite Gruppe einer Vielzahl von Werten angewandt wird, wobei jede Vielzahl von Werten wenigstens der Vielzahl von Signalen zugeordnet ist.

6. Verfahren nach Anspruch 5, **dadurch gekennzeichnet, daß** die zweite Gruppe der Vielzahl von Werten mittels experimenteller Tests erfaßt ist.

7. Verfahren nach Anspruch 6, **dadurch gekennzeichnet, daß** sich die zweite Gruppe der Vielzahl von Werten mit der ersten Gruppe der Vielzahl von Werten deckt.

8. Verfahren nach einem der vorhergehenden Ansprüche, **dadurch gekennzeichnet, daß** die Vielzahl von Signalen durch Signale definiert ist, die zu einer allgemeinen Vielzahl von Signalen gehören und die größte diskriminierende Kraft bezüglich fehlerhafter Bedingungen der Einrichtung haben.

9. Verfahren nach Anspruch 8, **dadurch gekennzeichnet, daß** die diskriminierende Kraft durch Anwendung statistischer Methoden der kanonischen Diskriminanzanalyse auf eine dritte Gruppe einer Vielzahl von Werten berechnet ist, wobei jede Vielzahl von Werten der allgemeinen Vielzahl von Signalen zugeordnet ist.

10. Verfahren nach einem der vorhergehenden Ansprüche, **dadurch gekennzeichnet, daß** es mit einem System arbeitet, das wenigstens ein Stellglied und wenigstens einen Sensor aufweist, wobei wenigstens eines der Signale der Vielzahl von Signalen aus dem Sensor oder von Komponenten stammt, die die von dem Sensor stammenden Signale verarbeiten.

11. Verfahren nach Anspruch 10, **dadurch gekennzeichnet, daß** der Ausgangswert so ausgelegt ist, daß er den fehlerhaften Zustand des Sensors angibt.

12. Verfahren nach Anspruch 10, **dadurch gekennzeichnet, daß** der Ausgangswert so ausgelegt ist, daß er den fehlerhaften Zustand des Stellgliedes angibt.

13. Verfahren nach Anspruch 10, **dadurch gekennzeichnet, daß** der Ausgangswert so ausgelegt ist, daß er den fehlerhaften Zustand des Sensors und des Stellgliedes angibt.

14. Verfahren nach einem der vorhergehenden Ansprüche, **dadurch gekennzeichnet, daß** jeder Kategorie eine Vielzahl von Ausgangswerten zugeordnet ist.

15. Verfahren nach Anspruch 14, **dadurch gekennzeichnet, daß** die Vielzahl von Ausgangswerten zu der Vielzahl von Eingangswerten homogen ist.

16. Verfahren nach Anspruch 15, **dadurch gekennzeichnet, daß** die Vielzahl von Ausgangswerten, die einer ersten der Kategorien zugeordnet ist, die baryzentrische Vielzahl von Werten der ersten Kategorie selbst ist.

17. Verbrennungsmotor, der ein katalytisches System zum Reduzieren von Schadstoffemissionen aufweist, **dadurch gekennzeichnet, daß** er eine Einrichtung zum Überwachen des Wirkungsgrades des katalytischen Systems aufweist, die nach dem Verfahren nach einem der Ansprüche 1 bis 16 arbeitet.

## Revendications

1. Procédé d'estimation de l'efficacité d'un système pour réduire les émissions polluantes d'un moteur à combustion interne (1) comprenant un système catalytique et ayant une pluralité de composants équipés de capteurs de contrôle (6, 7, 9) pour fournir une pluralité de signaux ;
le procédé comprenant les étapes consistant à :
acquérir une pluralité de valeurs, chaque valeur de ladite pluralité de valeurs correspondant à un signal respectif de ladite pluralité de signaux ;
associer une valeur de sortie à ladite pluralité de signaux ;
calculer un indice de relation de ladite pluralité de valeurs avec un ensemble de catégories de détérioration prédéfinies, au moyen d'une fonction d'indice de relation prédéterminée, chacune desdites catégories de détérioration ayant associé à un vecteur de coefficient, utilisé par ladite fonction d'indice de relation pour calculer ledit indice de relation, et au moins une valeur de sortie caractéristique de ladite catégorie de détérioration, ladite valeur de sortie étant corrélée à un état de détérioration des composants dudit système catalytique ; et
associer à ladite pluralité de signaux ladite valeur de sortie caractéristique de la catégorie ayant l'indice de relation le plus élevé avec ladite pluralité de valeurs.

2. Procédé selon la revendication 1, **caractérisé en ce que** ladite fonction d'indice de relation est définie par un polynomial.

3. Procédé selon l'une quelconque des précédentes revendications, **caractérisé en ce que** lesdits vecteurs de coefficient associés audites catégories sont calculés au moyen de procédés statistiques d'analyse discriminatrice appliqués à un premier groupe de pluralité de valeurs dans lequel chaque pluralité de valeurs est associée à ladite pluralité de signaux.

4. Procédé selon la revendication 3, **caractérisé en ce que** ledit premier groupe de pluralité de valeurs est acquis au moyen de tests expérimentaux.

5. Procédé selon l'une quelconque des précédentes revendications, **caractérisé en ce que** lesdites catégories sont définies au moyen de l'utilisation de procédés statistiques d'analyse de groupe appliqués à un deuxième groupe de pluralité de valeurs dans lequel chaque pluralité de valeurs est associée à au moins ladite pluralité de signaux.

6. Procédé selon la revendication 5, **caractérisé en ce que** ledit deuxième groupe de pluralité de valeurs est acquis au moyen de tests expérimentaux.

7. Procédé selon la revendication 6, **caractérisé en ce que** ledit deuxième groupe de pluralité de valeurs coïncide avec ledit premier groupe de pluralité de valeurs.

8. Procédé selon l'une quelconque des précédentes revendications, **caractérisé en ce que** ladite pluralité de signaux est définie par des signaux qui appartiennent à une pluralité générale de signaux et qui ont le plus grand pouvoir discriminatif eu égard aux conditions défectueuses possibles dudit dispositif.

9. Procédé selon la revendication 8, **caractérisé en ce que** le pouvoir discriminatif est calculé en appliquant des procédés statistiques d'analyse canonique discriminatrice à un troisième groupe de pluralité de valeurs dans lequel chaque pluralité de valeurs est associée à ladite pluralité générale de signaux.

10. Procédé selon l'une quelconque des précédentes revendications, **caractérisé en ce qu'**il fonctionne avec un système comprenant au moins un actionneur et au moins un capteur, au moins l'un des signaux de ladite pluralité de signaux provenant dudit capteur ou de composants qui traitent les signaux provenant dudit capteur.

11. Procédé selon la revendication 10, **caractérisé en ce que** ladite valeur de sortie est conçue pour indiquer l'état défectueux dudit capteur.

12. Procédé selon la revendication 10, **caractérisé en ce que** ladite valeur de sortie est conçue pour indiquer l'état défectueux dudit actionneur.

13. Procédé selon la revendication 10, **caractérisé en ce que** ladite valeur de sortie est conçue pour indiquer l'état défectueux dudit capteur et dudit actionneur.

14. Procédé selon l'une quelconque des précédentes revendications, **caractérisé en ce qu'**une pluralité de valeurs de sortie est associée à chacune desdites catégories.

15. Procédé selon la revendication 14, **caractérisé en ce que** ladite pluralité de valeurs de sortie est homogène avec ladite pluralité de valeurs d'entrée.

16. Procédé selon la revendication 15, **caractérisé en ce que** ladite pluralité de valeurs de sortie associée à une première desdites catégories est la pluralité barycentrique de valeurs de ladite première catégorie elle-même.

17. Moteur à combustion interne comprenant un système catalytique pour réduire les émissions polluantes, **caractérisé en ce qu'**il comprend un dispositif pour contrôler l'efficacité dudit système catalytique fonctionnant conformément au procédé selon l'une quelconque des revendications 1 à 16.
